**Europäisches Patentamt**

**European Patent Office**

**Office européen des brevets**

(19)

(11) Numéro de publication: **0 069 107**
A1

(12)
# DEMANDE DE BREVET EUROPEEN

(21) Numéro de dépôt: **82870037.7**

(22) Date de dépôt: **29.06.82**

(51) Int. Cl.³: **B 62 D 47/02,** B 62 D 1/24

(30) Priorité: **01.07.81 BE 6047489**

(43) Date de publication de la demande: **05.01.83**
**Bulletin 83/1**

(84) Etats contractants désignés: **CH DE FR GB IT LI NL SE**

(71) Demandeur: **Leyen, Jacques, boulevard Hector Denis 361, B-4000 Liège (BE)**

(72) Inventeur: **Leyen, Jacques, boulevard Hector Denis 361, B-4000 Liège (BE)**

(74) Mandataire: **Dellicour, Paul, Office de Brevets E. Dellicour rue Fabry 18/012, B-4000 Liège (BE)**

(54) **Système de transport interurbain consistant en un ensemble de plusieurs voitures électriques montées sur pneumatiques.**

(57) Système de transport interurbain consistant en un ensemble de plusieurs voitures électriques sur roues à pneumatiques dont chaque voiture, la première seule étant occupée par un conducteur, comporte deux trains de roues directeurs et moteurs.

Le volant de la première voiture – en même temps qu'il commande des mouvements aux roues de ladite voiture – fait enregistrer ces mouvements dans une mémoire (8) située dans la voiture suiveuse, de telle manière que ces mêmes mouvements sont exécutés en temps opportun et au lieu opportun par cette voiture.

Une mémoire de voiture suiveuse fait office de volant pour elle-même, c'est-à-dire pour ses roues, et en même temps commande une inscription dans le mémoire de la voiture qui la suit, et ainsi de suite.

0069107

- 1 -

<u>Système de transport interurbain consistant en un ensemble</u>
<u>de plusieurs voitures électriques montées sur pneumatiques.</u>

La présente invention concerne les transports en commun
et a pour but de remédier aux problèmes devenant de plus
en plus aigus dans les villes, où les encombrements sont
le lot quotidien.

Un objet de la présente invention est de réaliser un système de transport en commun capable de prendre à chaque
voyage un grand nombre de passagers.

Un autre objet de la présente invention est de réaliser
ce système de transport en commun, de telle manière
qu'il puisse circuler sans difficulté dans les rues,
quelles qu'en soient la largeur et les sinuosités.

Pour atteindre les buts fixés par la présente invention,
on part d'un système de transport en commun qui comporte un ensemble de plusieurs voitures de dimensions moyennes, disposées à la suite l'une de l'autre, la première seule étant occupée par un conducteur et chacune
étant montée sur pneumatiques. Avec ce système de transport en commun on doit avoir la possibilité de réaliser
jusqu'aux braquages très aigus et, en outre, d'obtenir
que le parcours des voitures suiveuses épouse fidèlement celui de la première, où se trouve le conducteur.

- 2 -

0069107

Pour être non polluant, il est prévu que le système de
transport en commun suivant l'invention fera appel à
des moteurs électriques, dont l'alimentation peut être
réalisée de diverses manières appropriées sortant du
cadre de la présente invention.

Le système de transport en commun du type décrit ci-
dessus et conforme à l'invention est caractérisé en se
que chaque voiture comporte deux trains de roues directeurs et moteurs, en ce que le volant de la première
voiture, en même temps qu'il commande des mouvements
aux roues de ladite voiture, fait enregistrer ces mouvements dans une mémoire située dans la voiture suiveuse,
de telle manière que ces mêmes mouvements sont exécutés
en temps opportun et au lieu opportun par cette voiture,
et en ce qu'une mémoire de voiture suiveuse fait office
de volant pour elle-même, c'est à dire pour ses roues,
et en même temps commande une inscription dans la mémoire
de la voiture qui la suit, et ainsi de suite.

Suivant l'invention, la mémoire d'une voiture suiveuse
est pourvue d'un mécanisme inscripteur enregistrant tout
ordre de braquage ou de redressement commandé soit par
le volant de la première voiture, soit par la mémoire
de la voiture suiveuse précédente, et d'un mécanisme
exécuteur identique à celui de la première voiture, commandant aux roues les mouvements enregistrés au moment
où ladite voiture occupe la place, à laquelle se trouvait
exactement la voiture précédente, quand elle a braqué
ou redressé.

La manoeuvre et le contrôle du convoi sont réalisés par
une commande se trouvant sur chaque voiture et fonctionnant simultanément. La motorisation de cette commande
consiste en la combinaison d'un tachymètre, avec demandeur

- 3 -

0069107

et mainteneur de vitesse, et d'un rhéostat variable, cette combinaison étant désignée dans la suite de cette description sous le nom de " tachystat ". Un freinage général est prévu, commandant électriquement les freins à disque de toutes les voitures en même temps.

Suivant l'invention encore, des rectifications particulières à un convoi sont réalisées automatiquement par un système d'alignement et de réalignement automatique des voitures, monté dans chacune des voitures suiveuses. Il est aussi prévu un freinage automatique sur les disques d'une voiture, freinage qui entre en action au moment de la formation du convoi et lorsque la voiture directement suiveuse perd le contact.

La présente invention est décrite maintenant avec plus de détails sur la base des dessins annexés, à titre d'exemples uniquement, montrant en:

Figure 1 une vue de profil schématique d'un transport en commun à trois voitures suivant l'invention;

Figures 2 et 3 deux exemples de braquage obtenu avec le système suivant l'invention;

Figure 4 une vue par dessous d'une voiture du système, avec plan de la transmission de la force motrice à l'arbre moteur;

Figure 5 une vue en élévation avec coupe de la transmission suivant la figure 4, et une coupe de la transmission de la direction des roues;

Figures 6A et 6B respectivement une vue de profil de l'appareil de commande appelé tachystat et de sa motorisation, et un schéma de la commande par pédale;

Figures 7A et 7B des vues schématiques du rhéostat variable;

Figures 8A à 8D des vues des dispositifs de raccordement et d'inscription;

Figures 9A à 9I des vues des dispositifs de direction et de post-direction (plan, profils, détails), ainsi qu'un plan de la direction à partir du volant;

Figure 10 le dispositif de freinage électrique sur disques;

Figure 11 le dispositif d'alignement et de réalignement des voitures;

Figures 12A et 12B des schémas électriques du freinage automatique, et

Figure 13 un aperçu général des transmissions électriques.

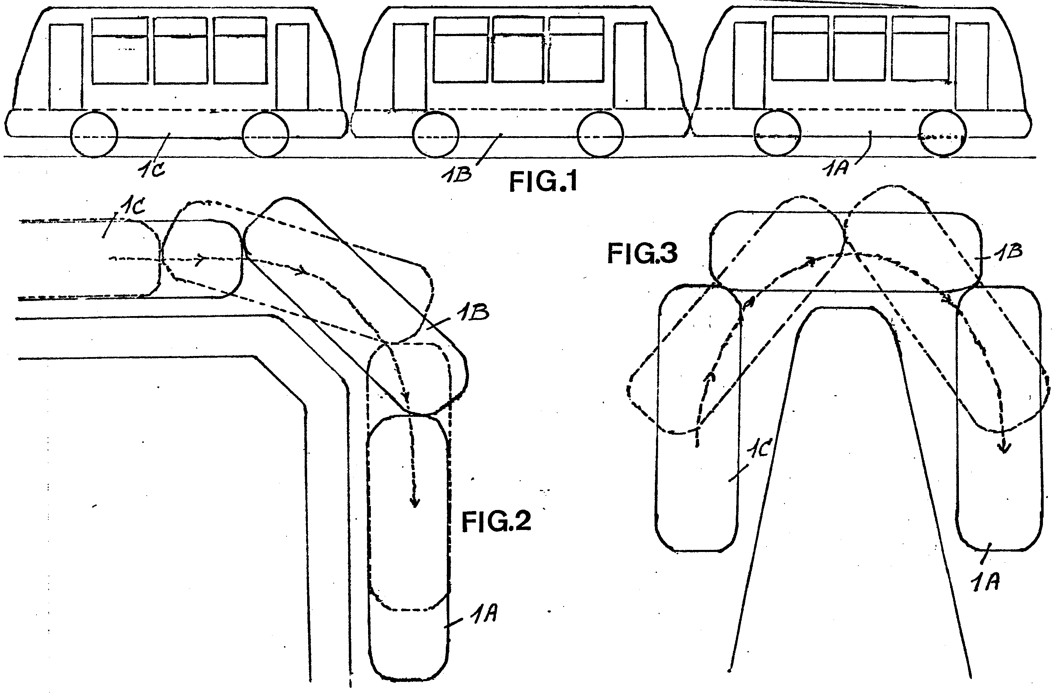

Le système de transport en commun suivant l'invention consiste en une suite de voitures, suivant figure 1, mues à l'électricité, la première 1A étant pourvue d'un poste de conduite dont les ordres sont communiqués aux voitures suiveuses 1B, 1C, .....

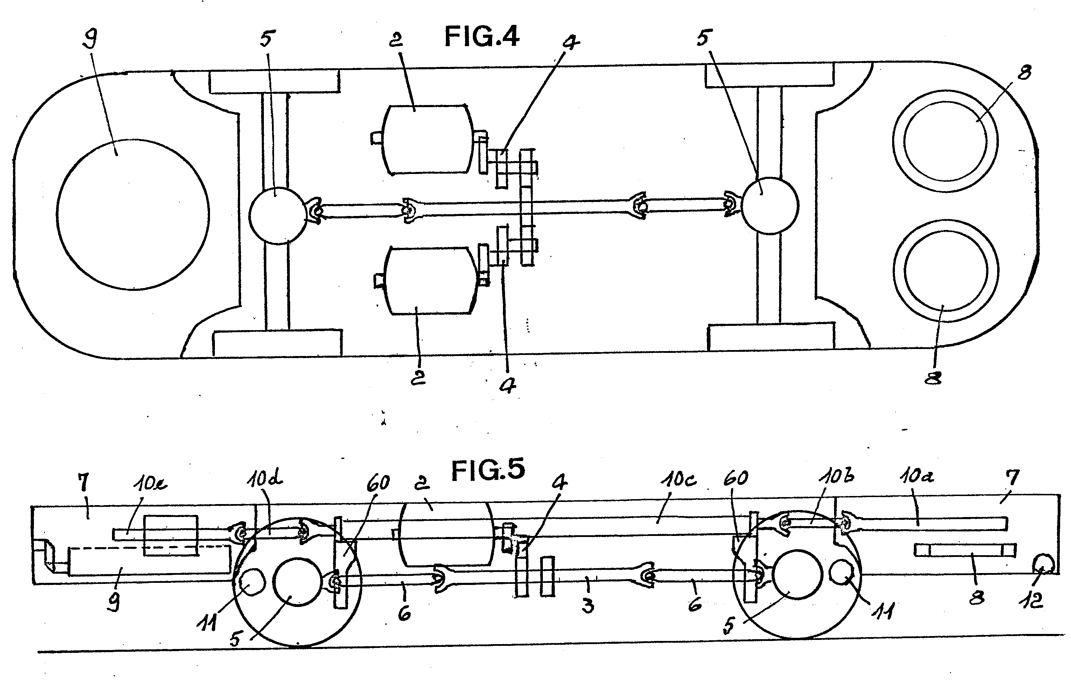

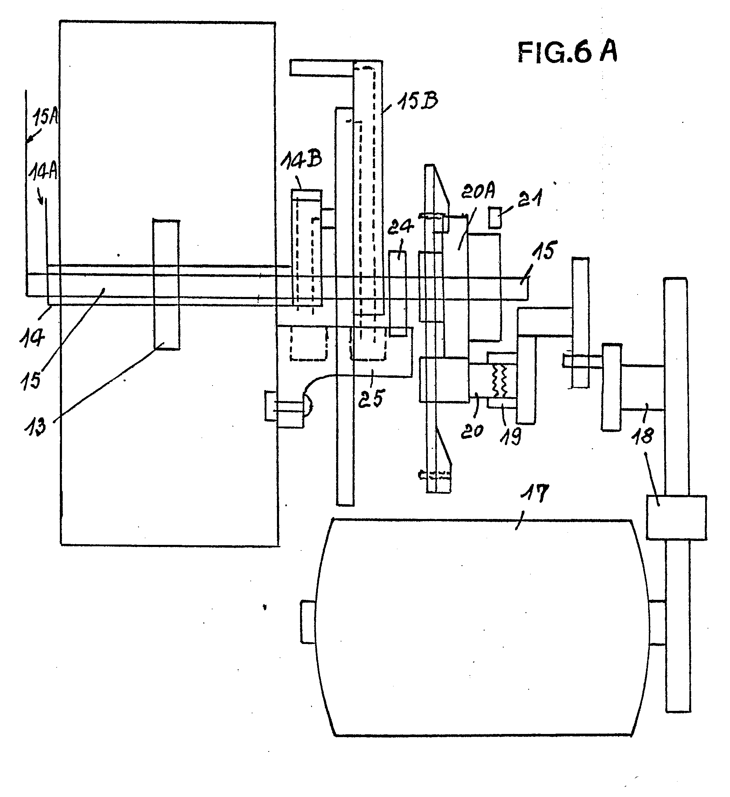

La motorisation est réalisée au moyen de deux forts moteurs électriques 2 (figures 4 et 5) dans chaque voiture, et il est prévu pour demander et obtenir la même vitesse de toutes les voitures l'appareil dénommé tachystat qui sera décrit dans la suite.

Les moteurs 2 attaquent le grand tronçon de l'arbre moteur 3 au moyen d'un raccordement par galets dentés 4, figures 4 et 5. Vers l'avant et vers l'arrière ce tronçon rejoint les différentiels 5 par l'intermédiaire de deux arbres télescopiques à deux cardans 6. Les figures 4 et 5 montrent aussi les caissons avant et arrière 7, avec à l'avant le plan et la coupe des couronnes-mémoires 8 et à l'arrière un tambour d'enroulement 9 pour les cables de raccordement électrique. La figure 5 montre en outre la coupe de l'arbre de direction 10 en cinq tronçons, qui sera décrit par après de façon détaillée, la coupe des moteurs des freins à disques 11 et celle du moteur de l'inscription 12.

On a représenté en figure 6A une coupe du tachystat, combinaison d'un tachymètre et d'un rhéostat variable, qui fonctionne sous les ordres du conducteur mais dont l'action est en grande partie automatique. Dans les véhicules électriques les moteurs reçoivent du courant par l'intermédiaire d'un rhéostat variable; dans le cas suivant l'invention il y a un rhéostat, donc un tachystat par voiture. Le rhéostat devra varier, c'est à dire laisser passer d'autant plus d'intensité ou d'ampères que la vitesse demandée sera élevée ou, même si la vitesse est faible, selon que l'effort à fournir est grand ( dans les montées).

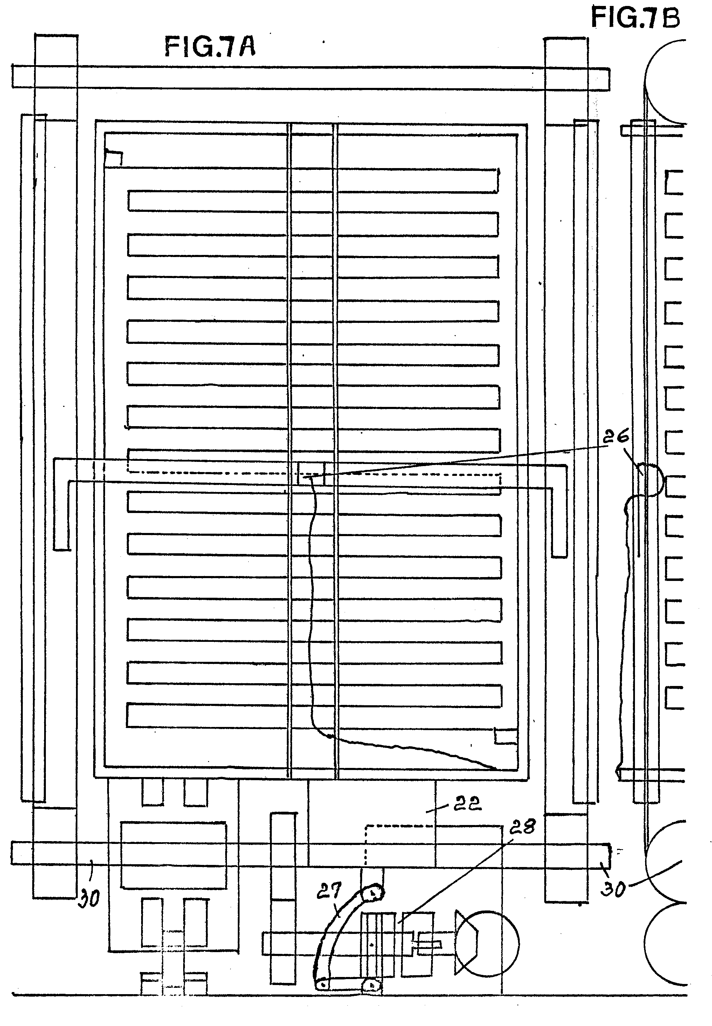

Le choix du rhéostat peut varier. On a schématisé et décrit ici un rhéostat à curseur montant sur commande et descendant par gravité, figures 7A et 7B, mais comme il en existe de divers types l'invention peut être considérée comme s'appliquant avec n'importe quel type de rhéostat variable.

La figure 6A montre que la vitesse des roues est commu-

niquée par le galet 13 à un arbre tubulaire 14 qui porte à gauche l'aiguille noire 14A, celle de la vitesse réelle, visible pour le conducteur et à droite l'aiguille noire active 14B dont les mouvements se combinent avec ceux de l'aiguille rouge 15B, qui est solidaire de l'aiguille rouge 15A, visible pour le conducteur, par l'entremise de l'arbre plein 15.

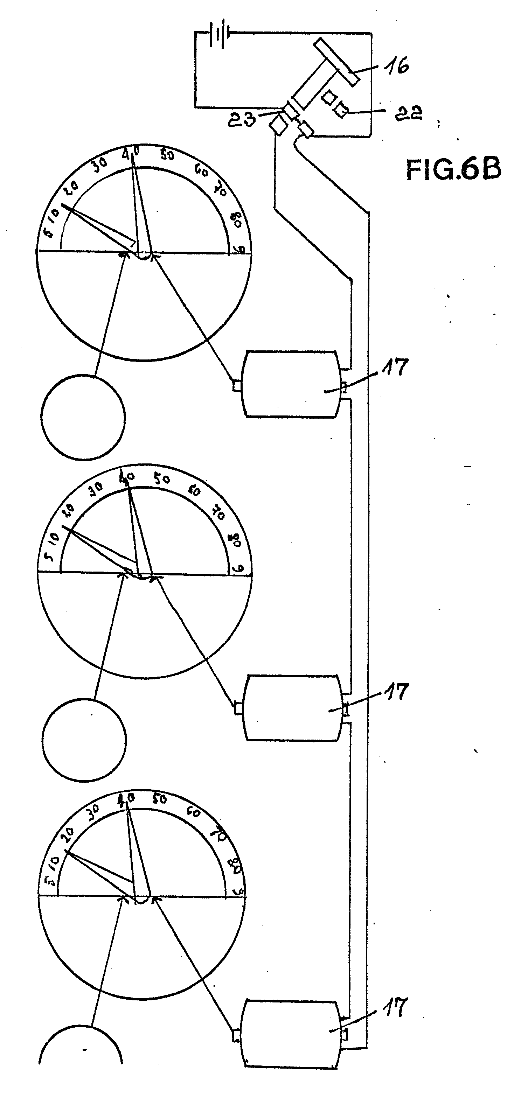

L'aiguille rouge 15A marque la vitesse demandée. Celle-ci dépend de tout le mécanisme de droite sur la figure, lequel mécanisme est fonction dans toutes les voitures des ordres donnés par le conducteur au moyen de la pédale d'accélération 16, figure 6B, dont dépendent les moteurs 17. La figure 6A montre que chacun de ces moteurs communique sa vitesse à une transmission 18 terminée par une croix de Malte. L'arbre de celle-ci engrène un embrayage 19, où vient s'appliquer sur commande un galet correspondant 20, engrené lui-même avec un second galet 20A lequel coulisse sur l'arbre 15, dont il est solidaire et fait ainsi avancer l'aiguille rouge 15A-15B. Pour maintenir la vitesse demandée on agit sur une dent 21, qui fait cliquet sur un galet faisant corps avec 20A au moyen d'un électroaimant 22 qui dépend des plots 23 du maintien de vitesse, figure 6A. Sur le schéma de la figure 6B, on voit que ce sont les plots 23 qui - quand ils sont en contact - provoquent l'embrayage entre les moteurs 17 et les aiguilles rouges 15A-15B. Il s'agit aussi d'un procédé électromagnétique.

Le retour de l'aiguille rouge 15A-15B à zéro se fait au moyen d'un ressort spirale 24, qui ramène l'aiguille sur l'arrêtoir 25. Quand la vitesse demandée est atteinte, l'aiguille 14A rattrape l'aiguille 15A. Les deux aiguilles coïncidant, la vitesse reste constante. Si l'aiguille 14A dépasse l'aiguille 15A, il y aura manque de courant (voir plus loin) et de ce fait baisse de vitesse.
Si le conducteur lâche complètement la pédale d'accélération, l'aiguille 15A retombe à zéro; il y aura donc
aussi baisse de vitesse permettant le freinage et l'arrêt.

Les aiguilles actives 14B et 15B sont toutes deux formées d'un corps tubulaire et renferment chacune deux
conduites électriques qui se combinent pour aller:
l'une vers l'accroissement d'intensité (celle de droite dans 14B et celle de gauche dans 15B), l'autre vers
le maintien d'intensité (gauche dans 14B, droite dans
15B). Le courant est amené à des électroaimants commandant le rhéostat variable qui constitue avec le tachymètre l'appareil appelé tachystat.

Il y a un tachystat dans chaque voiture et tous fonctionnent simultanément, figure 6A, sur ordre du conducteur. Ils font office de transmetteurs d'ordres, d'égalisateurs de vitesse, de commutateurs et interrupteurs
de puissance et d'accélérateurs.

En figure 7A est représenté le rhéostat variable avec
curseur 26 qui, quand il monté, réduit la résistance
et permet le passage de plus en plus d'ampères vers
les moteurs et qui, quand il retombe - ce que son poids
doit lui permettre - prive le moteur de courant et rend
le freinage possible.

En dessous du rhéostat proprement dit sont montés deux
mécanismes : l'embrayage de la montée du curseur et le
freinage de celui-ci pour le maintien de vitesse.

- Montée du curseur : la conduite de gauche de l'aiguille rouge, figure 6A/ 15B, envoie du courant dans l'électroaimant 22, ce qui par l'entremise d'un levier 27
embraye en 28 le mécanisme de montée 29. Toute interruption de courant arrête par conséquent le mécanisme.

- Freinage du curseur : A gauche et en bas du dessin
figure 7A, on voit plus ou moins le dos d'un patin de
frein qui, avec celui placé à l'opposé, enserre l'arbre de montée 30 sous la commande d'un mécanisme analogue à celui de la montée. Cet effet est produit quand
du courant est envoyé dans l'électroaimant par la conduite de droite de l'aiguille rouge, figure 6A/ 15B,
laquelle est sous tension quand les plots aux sommets
des deux aiguilles se touchent.

Le système de transport en commun suivant l'invention
est dirigé de la façon suivante.

Le volant de la première voiture, en même temps qu'il
commande des mouvements aux roues de la voiture, où il
se trouve, fait enregistrer ces mouvements dans des couronnes ou mémoires situées dans le caisson avant (figures
4, 5) de la voiture qui suit, pour que les mêmes ordres
soient exécutés en temps opportun et au lieu opportun
par cette voiture. Les mouvements de la deuxième voiture,
quand ils sont en cours d'exécution, sont transmis à la
troisième pour exécution ultérieure, et ainsi de suite
s'il y a lieu.

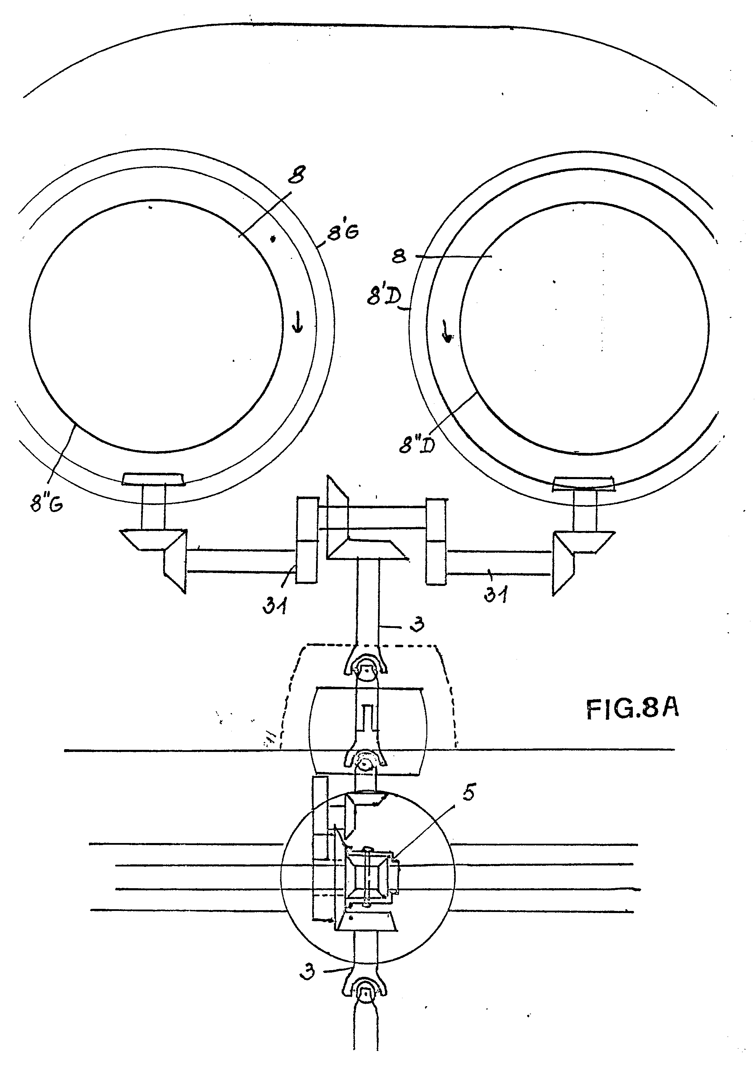

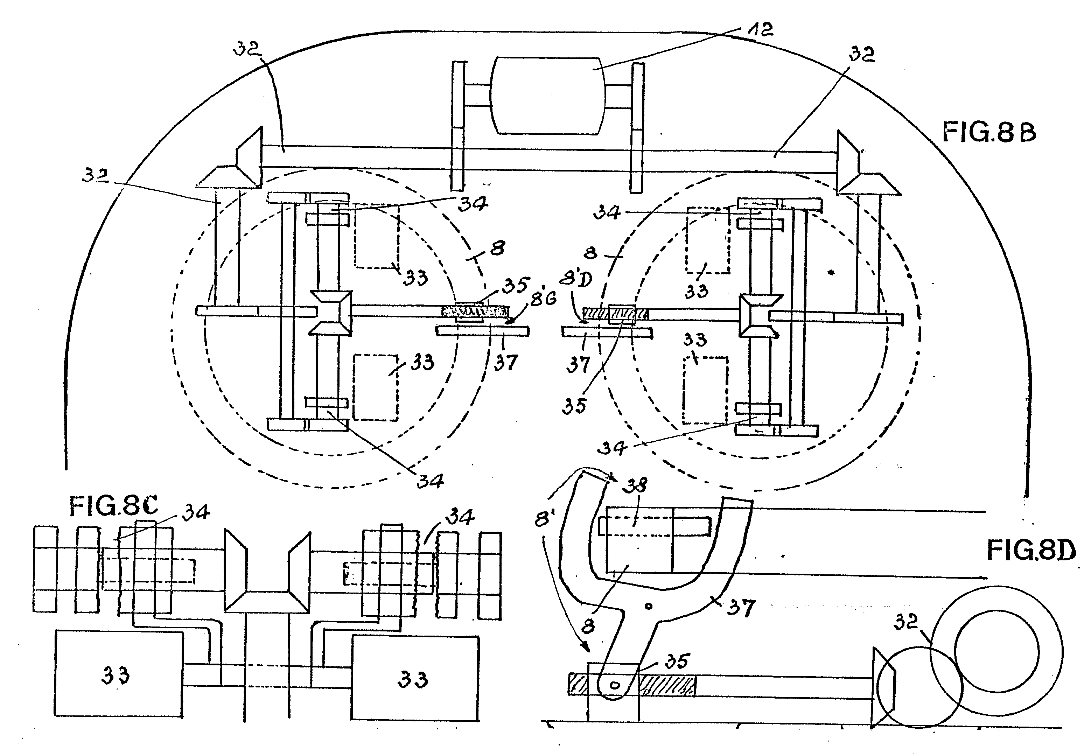

Les couronnes 8, figure 8A, tournent en synchronisation
avec les roues de la voiture où elles sont montées .
L'ensemble arbre moteur-différentiel, désigné en bloc
par 3, leur communique une certaine vitesse de rotation
par l'entremise        d'une transmission 31, qui part
d'un galet denté droit solidaire de l'arbre moteur, passe
du pont avant au caisson par un arbre télescopique à deux cardans et donne une vitesse égale aux couronnes 8, gauche et droite, en passant par une série de pignons droits et coniques. Les couronnes tournent en sens inverse l'une de l'autre. Sur leurs diamètres perpendiculaires à l'axe de la voiture sont placées: l'inscription en 8'g et 8'd et l'exécution en 8"g et 8"d.

La mémoire tenant lieu de volant dans les voitures suiveuses, elle doit:

1° enregistrer tout ordre de braquage ou de redressement commandé soit par le volant de la voiture conductrice, soit par la mémoire de la voiture suiveuse qui précède. La figure 8B montre en quoi consiste l'inscription. Le moteur 12 est en marche permanente (voir aussi figure 5) ainsi que la transmission 32. Quand de la voiture précédente arrive un ordre électrique, celui-ci est reçu dans un des quatre électroaimants 33, dont la mise sous tension provoque l'embrayage voulu 34 (voir dessin inférieur gauche). Selon qu'il s'agit d'un braquage ou d'un redressement, l'arbre fileté tournera à gauche ou à droite faisant avancer vers le centre ou reculer le bloc 35 relié à la fourche 37, laquelle fait entrer vers l'intérieur ou sortir vers l'extérieur de la couronne 8 les lamelles 38, dont l'entrée provoquera un braquage et la sortie le redressement.

2° commander aux roues les mouvements enregistrés au moment où la voiture suiveuse occupe la place à laquelle se trouvait exactement la voiture précédente, quand elle a braqué ou redressé. Selon les dessins exemplatifs, cette substitution se produit quand les roues ont tourné deux fois et demi (les roues ayant 1m de diamètre et les voitures 7,85m de longeur), et la transmission de la vites-

0069107

se aux couronnes donne à celles-ci une vitesse rotative qui leur fait accomplir un demi-tour, pendant que les roues font deux tours et demi, soit un rapport de 5/1.

La voiture précédente n'est pas nécessairement la voiture où se trouve le conducteur. Puisqu'une mémoire égale un volant, toute voiture transmet les mouvements qu'elle exécute à la mémoire de la voiture qui la suit, de sorte que le nombre de voitures est indéfini, et ceci d'autant plus que chaque voiture est automotrice. Pour la simplification il a été envisagé ici   le convoi comporterait trois voitures, une dénommé  nductrice et les deux autres suiveuses ou post-dirigées et munies de mémoire.

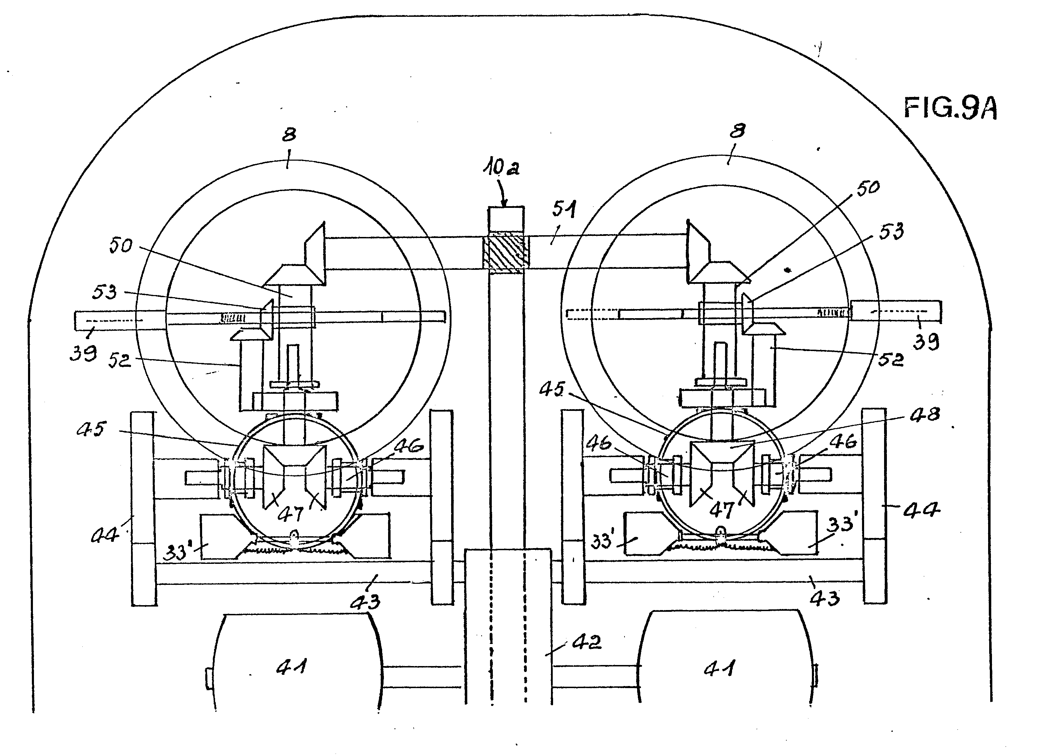

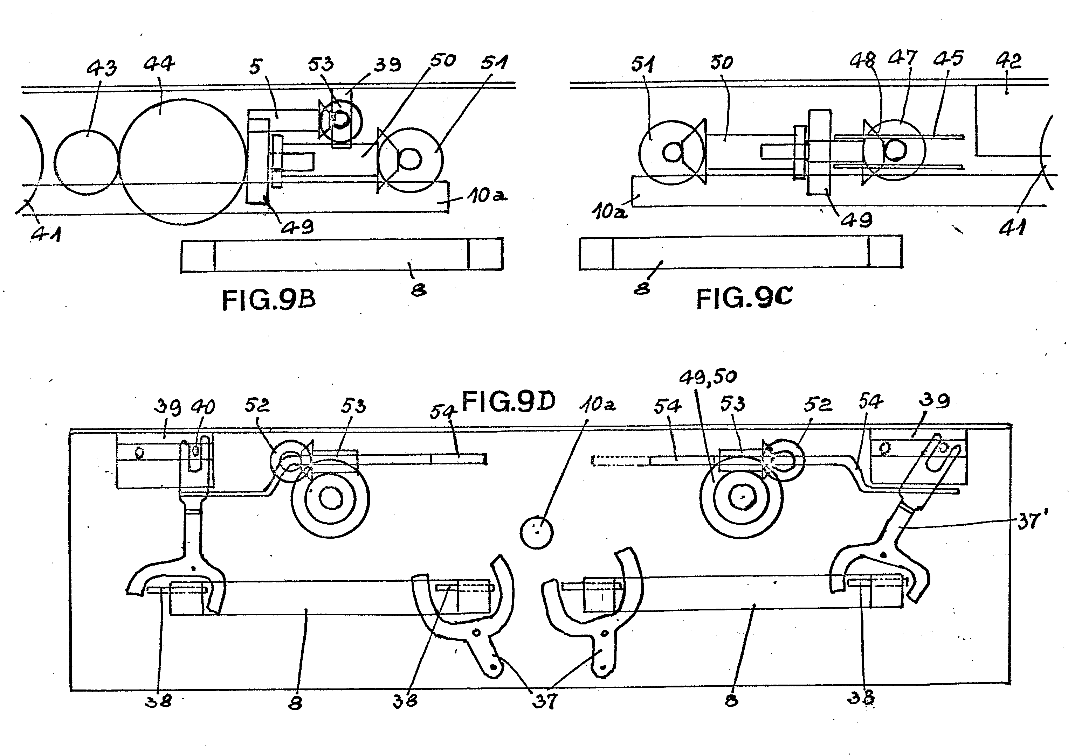

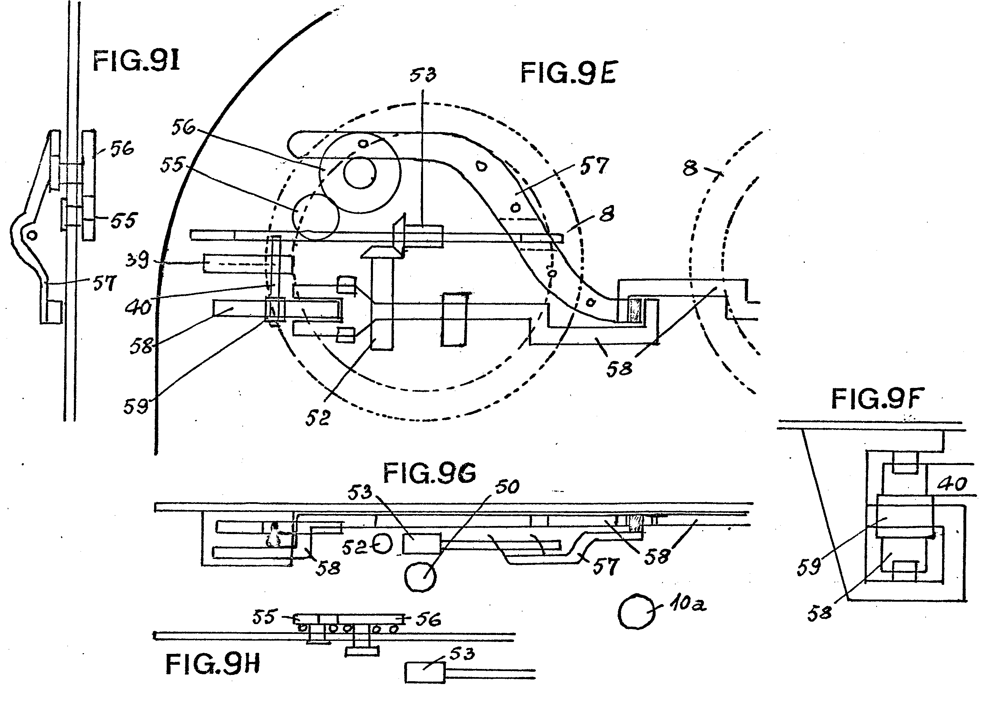

Les figures 9A, 9B, 9C et 9D montrent l'exécution d'un mouvement à partir d'un ordre inscrit dans la mémoire. La figure 9D montre une coupe de l'inscription à gauche et de l'exécution à droite. La fourche d'inscription 37 a fait entrer une série de lamelles 38 vers l'intérieur de la couronne et la fourche d'exécution 37' n'a pas encore agi. A droite la fourche d'exécution a agi, c'est à dire qu'elle a poussé la barre de contact 40 vers l'extérieur du chemin de contact 39. Le rôle des contacts électriques à l'intérieur de ce dispositif est à la fois de provoquer le mouvement des roues suivant la figure 9A et l'inscription dans la voiture suivante suivant la figure 8B.

La figure 9A permet de comprendre la commande des mouvements des roues. Les deux moteurs 41 sont en marche permanente et communiquent leur vitesse et leur puissance à un réducteur de vitesse 42, d'où sort la transmission 43 qui anime les pignons 44. Quand il y a un contact dans le chemin 39, un des quatre électroaimants 33' retire son noyau, ce qui a pour effet de faire effectuer une légère rotation à l'anneau d'embrayage 45. Celui-ci, qui est muni de rochets, va donc provoquer l'embrayage d'un des quatre mouvements possibles: braquage à droite - redressement à droite - braquage à gauche - redressement à gauche. Un pignon 47 de la tubulure d'embrayage 46 va donc être mis en marche ainsi que le pignon 48. D'autre part le même anneau va embrayer un grand galet 49 avec un pignon conique 50. Ce dernier fait tourner dans un sens ou dans l'autre le grand pignon à vis sans fin centrale 51 et, enfin, celui-ci donne à l'arbre de direction 10a le mouvement qui sera transmis aux roues.

En outre, pour que cesse l'effort des moteurs sur l'arbre, le débrayage a lieu par cessation de la tension dans l'électroaimant de la façon suivante. Le galet 49 engrène un pignon denté 52 relié à un pignon à âme taraudée 53, lequel en tournant fera avancer ou reculer la barre de décontact 54 reliée aux plots du chemin de contact (voir figure 9D) et qui coupe ce contact quand l'amplitude du mouvement commandé est réalisée.

La figure 9B montre une coupe partielle de la transmission à l'arbre et au mécanisme de décontact. La figure 9C montre ce qu'est l'embrayage du pignon 50 par le double anneau d'embrayage 45.

Il faut rappeler qu'en même temps que de commander le mouvement à sa voiture, une connexion dans le chemin de contacts 39 met sous tension un électroaimant de l'inscription de la voiture suivante en vue de l'exécution du même mouvement par cette dernière.

Toute la description ci-dessus est valable pour les voitures tant conductrices que post-dirigées mais il y a une différence dans la conductrice en ce qui concerne les barre de direction et les contacts qui viennent directement du volant. Voir la figure 9E. Le volant mû par le conducteur aboutit au galet 55, qui engrène le galet 56, et un troisième galet solidaire de ce dernier et situé sous le plancher engrène la crémaillère d'une bielle de forme complexe 57. Cette bielle, selon le mouvement commandé, pousse une des deux tiges 58 qui fera avancer ou reculer la barre de contact 40 dans le chemin de contact 39. Les mouvements définitifs de la barre de direction résultent de l'engrenage de la tige 58 sur un galet fou 59 (voir figure 9F, coupe à droite). A partir de la barre de contact 40 le mécanisme est identique à celui des suiveuses (figure 9A). Dans la voiture conductrice la fourche dite d'exécution devient inscriptrice. Deux couronnes sont prévues à cet effet dans cette voiture (en pointillé sur la figure 9E). Cette inscription ne sert qu'en cas de marche arrière. Toutefois, cette manoeuvre étant très rare pour un convoi de ce genre, le mécanisme rétrogradant ne fait pas partie du présent brevet.

Les deux trains de roues de chaque voiture sont directeurs. L'arbre de direction 10 (voir figure 5) se compose d'un tronçon 10a fixé à la carrosserie à l'avant du véhicule, d'un tronçon flottant télescopique 10b à deux cardans, d'un grand tronçon 10c qui va d'un train de roues à l'autre et porte vers chacune de ses extrémités une roue à denture droite qui engrène avec les ponts de direction 60, dont les extrémités reçoivent les extrémités de cames solidaires des roues, d'un second tronçon flottant 10d et d'un dernier tronçon 10e en deux parties (voir plus loin) solidaire de la carrosserie à l'arrière.

Les roues avant et arrières prennent à chaque ordre des angles également divergents. Ce système a pour but, non seulement de favoriser les virages courts, mais de compenser un peu le manque de nervosité de la direction.

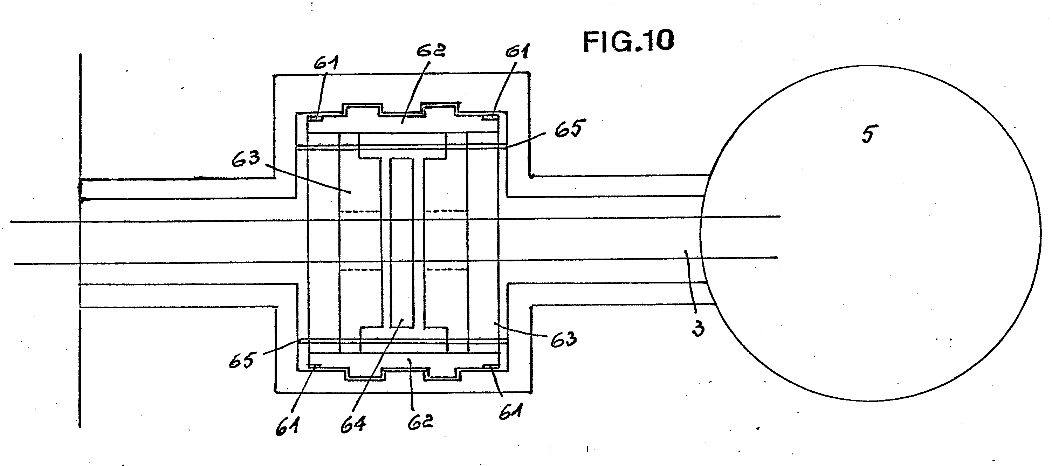

Le freinage général sur disques commandé electriquement aux freins à disques de toutes les voitures en même temps consiste en ce que la commande de freinage donnée par le conducteur au moyen d'une pédale, provoque l'accélération des moteurs 2 qui, par une transmission, va enclencher le mécanisme repris en figure 10.

La transmission attaque la denture 61 du cylindre de freinage 62. L'âme de ce cylindre comporte deux taraudages inverses, dans lesquels jouent les dentures hélicoïdales des armatures 63. Une faible rotation du cylindre 62 rapproche du disque 64, jusqu'à serrage et freinage complets, les armatures qui sont garnies de matière freinante. La rotation inverse, mue par un ressort, éloigne les armatures, d'où défreinage. Des tiges de maintien 65, solidaires du carter de l'arbre moteur 3, permettent aux armatures de coulisser horizontalement et leur évitent tout mouvement rotatif.

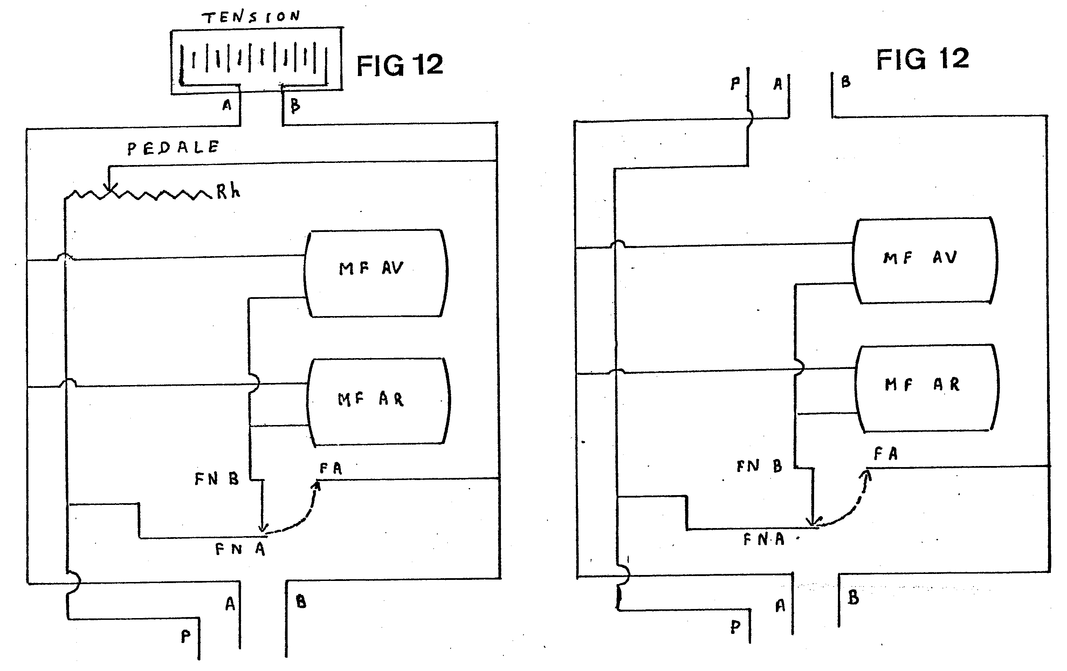

Pour faire fonctionner le freinage à disques le conducteur lâche la pédale d'accélération et appuie sur la pédale de frein, qui est en quelque sorte le variateur du rhéostat de frein (voir figure 12A) et qui, pendant la marche, laisse passer un peu de courant pour que les moteurs soient animés d'une faible rotation, afin qu'en cas de freinage il ne faille pas vaincre l'inertie. Tous les circuits du freinage concernant deux moteurs en parallèle dans chaque voiture.

Des dispositifs spéciaux permettent de réaliser automatiquement diverses rectifications particulières à un convoi tel que décrit ci-dessus, lorsque le convoi ou un élément

0069107

de celui-ci s'écarte de la normale ou risque un incident qui pourrait être préjudiciable.

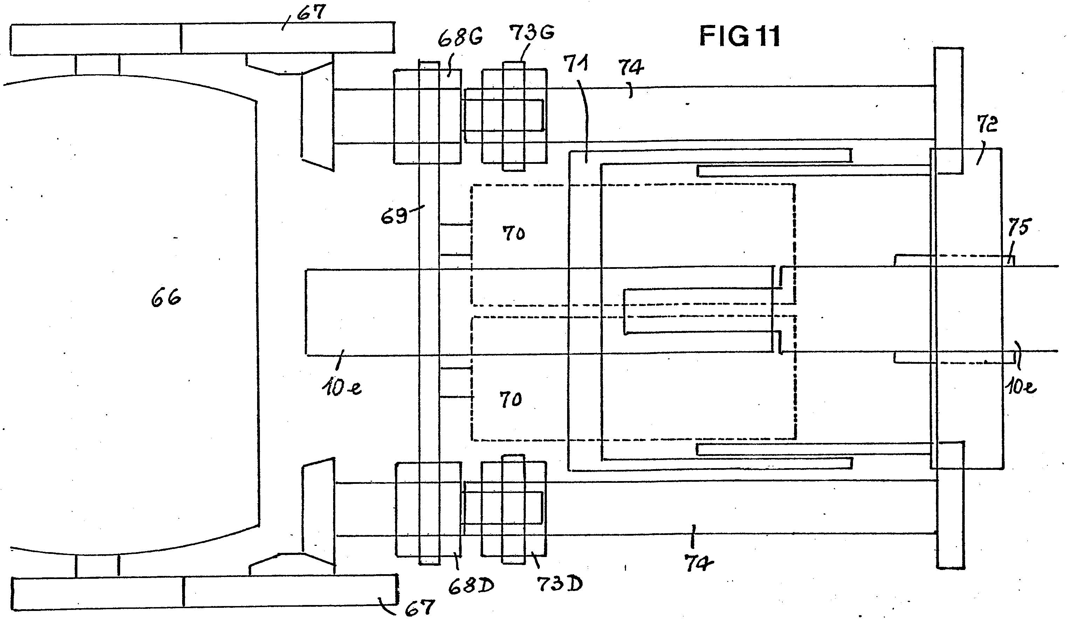

Ces dispositifs comportent entre autres un système d'alignement ou de réalignement automatique des voitures lors de la formation du convoi ou en cours de voyage. Ce système ne doit être monté que dans les voitures suiveuses. Il consiste à faire enregistrer l'écart dans le nez de la voiture non alignée. Cet écart provoque l'immobilisation d'une moitié du tronçon terminal de l'arbre de direction 10e (figure 5) qui est en deux pièces (figure 11); il débraye eu outre la direction ordinaire et met en branle un système d'embrayage suivant la figure 11.

Le moteur 66 est en marche constante pour autant que la pédale d'accélération soit en fonctionnement. Par la transmission 67 ce moteur fait tourner une moitié des embrayages rectifieurs 68G et 68D (gauche et droite). Ces pièces sont tenues dans une entretoise 69 reliée aux noyaux d'électroaimants 70. Quand ceux-ci sont sous tension, l'ensemble 68-69 avance et cale le demi-cylindre de rectification 71 qui est solidaire, voire monobloc, avec la portion terminale femelle 10e de l'arbre de direction. L'autre demi-cylindre de rectification 72 est affecté d'un léger mouvement tournant, quand un des demi-embrayages 73D ou 73G a rejoint son correspondant, ceci par l'entremise de l'arbre à pignon denté droit 74.

Entre les deux demi-cylindres 71 et 72 existe un système de ressorts à lames qui se tordent sous l'action du pignon 74 sur le demi-cylindre 72; or, celui-ci est rendu solidaire du demi-tronçon mâle 10e de l'arbre de direction au moyen d'une rainure 75, dans laquelle il coulisse. Donc toute action sur ce demi-cylindre provoquera un mouvement de l'arbre de direction, donc des roues. L'alignement ou le réalignement étant obtenu, le demi-embrayage 73 se retirera le premier et l'effort cessera et, grâce aux ressorts à lames rectifiant leur torsion, l'arbre de direction reprendra instantanément sa position normale. D'autre part, l'entretoise 69 et ce qui s'y rattache reviennent ensuite en position normale et le demi-cylindre 71
avec la portion d'arbre 10e sont décalés.

Il va de soi que ce dispositif ne fonctionne en marche
que lorsque le convoi est dans la ligne droite. Il
fonctionne lors de la formation pour mettre le convoi
en ligne droite.

Ces dispositifs spéciaux comportent encore un freinage
automatique sur les disques d'un voiture précédente, au
cas où sa suiveuse perd le contact. Ce freinage fonctionne
quand les blocs à ressort, dont est pourvu l'arrière des
voitures, sont tous en position extérieure car cette position ferme le circuit du freinage automatique et neutralise celui du freinage ordinaire.

Le freinage automatique n'a été représenté que par un
schéma électrique. La figure 12A est celui d'une conductrice et la figure 12B celui d'une suiveuse. A et B représentent les deux pôles de la conduite mère. Le schéma de
gauche montre comment une action sur la pédale accélère
les moteurs de frein de toutes les voitures. FNA et FNB
représentent sur les deux figures les connexions du freinage
normal . En cas de freinage automatique une des conduites
reliée aux moteurs (FNB) rejoint celle du freinage automatique FA, laquelle dépend du pôle B de la conduite mère.

En enfonçant quelques blocs le nouveau contact arrête le
freinage automatique.

Ce système permet en outre la formation du convoi : on neutralise le freinage automatique dans la dernière voiture en enfonçant et calant deux blocs et, dés qu'il y a tension, cette voiture peut se mettre en marche et rejoindre sa précédente qui s'ébranlera à son tour dés qu'elle sera rejointe, et ainsi de suite.

D'autres dispositifs pourront, voire devront être adjoints à l'invention pour la rendre tout à fait fonctionnelle. Ainsi, il a été fait allusion plus haut à une marche arrière, manoeuvre très rare et techniquement limitée à quelques mètres.

Certains compléments peuvent s'avérer nécessaires parmi les dispositifs de rectification, c'est ainsi qu'on envisagera:

- un blocage de l'arbre moteur, qui complètera le freinage à disques en immobilisant le convoi; ce blocage fonctionnant moyennant privation de courant, il pourrait immobiliser automatiquement le convoi en cas de panne.

- un anti-forçage, qui coupe l'arrivée de courant dans une suiveuse quand elle reçoit plus d'intensité que nécessaire; c'est le cas au sommet des montées.

- une reprise de l'effort dans les descentes, en reportant cet effort sur un échappement à boules.

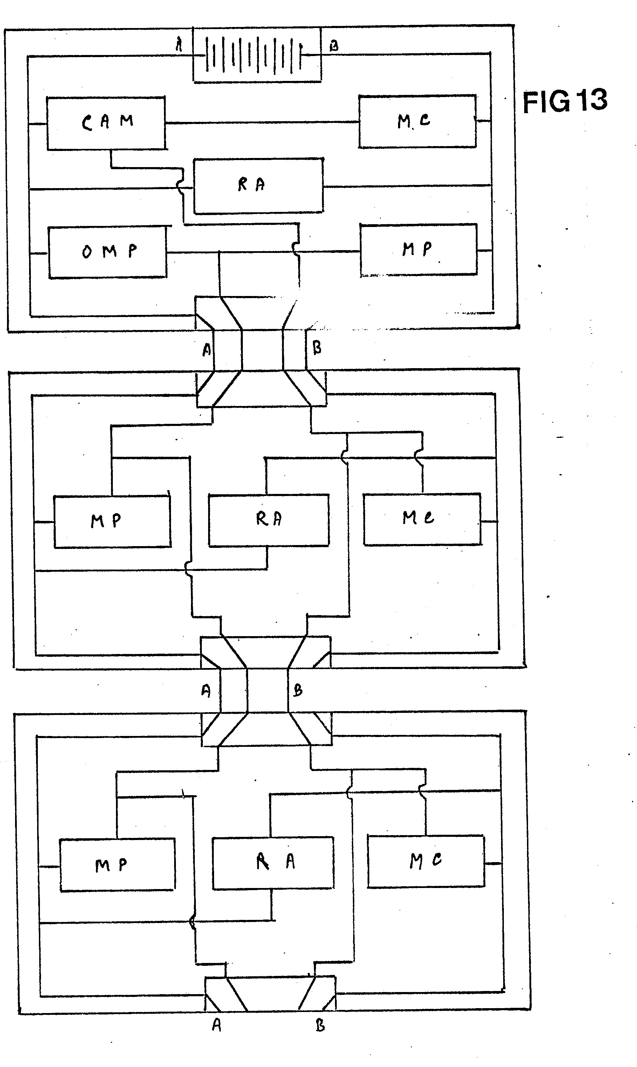

Comme déjà dit, l'alimentation en électricité du convoi sort du cadre de cette invention. Quoiqu'il en soit, il doit exister dans la conductrice un courant disponible. Le schéma de la figure 13 indique comment ce courant peut être acheminé vers les divers organes de l'ensemble:

- du lieu de tension disponible partent deux conduites A et B qui sont celles de la conduite mère. Cette dernière est en quelque sorte la prise de courant, qui se prolonge dans toutes les voitures et alimente tous les organes.

- les trois cadres représentent les trois voitures; la conduite mère est désignée partout par A-B.

- dans le premier cadre les deux rectangles de droite, en blanc, désignent:

C.A.M.= conduites des appareillages fonctionnant en marche sur ordres du conducteur;

O.M.P.= organes en marche permanente, mis en marche lors de la formation du convoi.

- dans le premier et dans les autres cadres C.A.M. est relié aux rectangles M.C. qui désignent les organes fonctionnant sur ordres du conducteur, M.P. désignent les organes qui ont un ou des moteurs en marche permanente, tels la direction et le tachystat, R.A. désignent les organes de rectification automatique, reliés à la conduite mère et dont la commutation résulte d'un écart.

La formation d'un convoi suivant l'invention se réalise de la façon suivante: 1) on amène les voitures sur une esplanade au moyen de petites remorques; 2) le formateur place les prises-relais entre les voitures; 3) le conducteur entre dans la première voiture et, après avoir vérifié si aucun commutateur n'est en fonction, fait signe au formateur; 4) celui-ci place (éventuellement) les prises de courant aériennes puis entre dans la dernière voiture pour neutraliser son freinage automatique; 5) le formateur ferme le circuit série des tachystats (éventuellement) et fait signe au conducteur qu'il peut lancer le courant pour la formation; 6) le conducteur appuie sur la pédale accélération et la dernière voiture (soit la troisième dans un convoi de trois voitures) se met en marche et le mécanisme d'alignement fonctionne à ce moment; 7) la deuxième voiture touchée par la troisième se met en marche et s'aligne à son tour en rejoignant la première voiture ou conductrice; 8) cette dernière se met en marche lentement jusqu'à rectitude du convoi.

0069107

Liste des indices de référence

| | |
|---|---|
| 1 | voitures |
| 2 | moteurs de motorisation |
| 3 | arbre moteur (télescopique à deux cardans) |
| 4 | galets dentés |
| 5 | différentiels |
| 7 | caissons avant et arrière |
| 8 | couronne mémoire |
| 9 | tambour d'enroulement |
| 10a,b,c,d,e | arbre de direction (cinq tronçons) |
| 11 | moteur des freins à disques |
| 12 | moteur de l'inscription |
| 13 | galet |
| 14 | arbre tubulaire portant aiguille |
| 14A, 14B | aiguilles noires |
| 15 | arbre plein |
| 15A, 15B | aiguilles rouges |
| 16 | pédale |
| 17 | moteurs |
| 18 | transmission |
| 19 | embrayage |
| 20 | galet |
| 20A | galet |
| 21 | dent |
| 22 | plots de contact |
| 23 | plots de contact |
| 24 | ressort spirale |
| 25 | arrêtoir |
| 26 | curseur |
| 27 | levier |
| 28 | embrayage |
| 29 | mécanisme de montée |
| 30 | arbre de montée |
| 31 | transmission |

0069107

| 32 | transmission du moteur d'inscription (12) |
|----|----|
| 33 | électroaimants |
| 33' | électroaimants |
| 34 | embrayage |
| 35 | bloc |
| 37 | fourche d'inscription |
| 37' | fourche d'exécution |
| 38 | lamelles |
| 39 | chemin de contact |
| 40 | barre de contact |
| 41 | moteurs de commande des roues |
| 42 | réducteur de vitesse |
| 43 | transmission |
| 44 | pignons |
| 45 | anneau d'embrayage |
| 46 | tubulure d'embrayage |
| 47 | pignon conique de transmission |
| 48 | pignon conique de transmission |
| 49 | grand galet |
| 50 | pignon conique |
| 51 | pignon à vis sans fin |
| 52 | pignon denté |
| 53 | pignon à âme taraudée |
| 54 | barre de décontact |
| 55 | galet |
| 56 | galet |
| 57 | bielle |
| 58 | tige |
| 59 | galet fou |
| 60 | pont de direction |
| 61 | denture |
| 62 | cylindre de freinage |
| 63 | armatures |
| 64 | disque |
| 65 | tiges de maintien |

0069107

| | | |
|---|---|---|
| 66 | | moteur |
| 67 | | transmission |
| 68D | - 68G | demi-embrayages rectifieurs (gauche-droit) |
| 69 | | entretoise |
| 70 | | électroaimant |
| 71 | | demi-cylindre de rectification |
| 72 | | demi-cylindre de rectification |
| 73D | - 73G | demi-embrayages (gauche - droit) |
| 74 | | arbre à pignon denté droit |
| 75 | | rainure |

- 1 -     0069107

Revendications

1. Système de transport en commun consistant en un ensemble de plusieurs voitures électriques sur roues à pneumatiques, dont la première seule est occupée par un conducteur, caractérisé en ce que chaque voiture comporte deux trains de roues directeurs et moteurs, en ce que le volant de la première voiture, en même temps qu'il commande des mouvements aux roues de ladite voiture, fait enregistrer ces mouvements dans une mémoire située dans la voiture suiveuse, de telle manière que ces mêmes mouvements sont exécutés en temps opportun et au lieu opportun par cette voiture, et en ce qu'une mémoire de voiture suiveuse fait office de volant pour elle-même, c'est à dire pour ses roues, et en même temps commande une inscription dans la mémoire de la voiture qui la suit, et ainsi de suite.

2. Système de transport en commun suivant la revendication 1, caractérisé en ce que la mémoire d'une voiture suiveuse est pourvue d'un mécanisme inscripteur enregistrant tout ordre de braquage ou de redressement commandé soit par le volant de la première voiture, soit par'la mémoire de la voiture suiveuse précédente, et d'un mécanisme exécuteur identique à celui de la première voiture, commandant aux roues les mouvements enregistrés au moment où ladite voiture occupe la place, à laquelle se trouvait exactement la voiture précédente, quand elle a braqué ou redressé.

3. Système de transport en commun suivant la revendication1, caractérisé en ce que la manoeuvre et le contrôle du convoi sont réalisés par une commande se trouvant sur chaque voiture et fonctionnant simultanément, qui consiste en la combinaison d'un tachymètre avec demandeur et mainteneur de vitesse et d'un rhéostat variable, et par un freinage général commandant électriquement les freins à disques de

0069107

toutes les voitures en même temps.

4. Système de transport en commun suivant la revendication 1, caractérisé en ce que des rectifications particulières à un convoi sont réalisées automatiquement par un système d'alignement et de réalignement automatique des voitures suiveuses.

5. Système de transport en commun suivant la revendication 1, caractérisé en ce que des rectifications particulières à un convoi sont réalisées automatiquement par un freinage automatique sur les disques d'une voiture, qui entre en action lorsque la voiture suiveuse directe perd le contact.

6. Système de transport en commun suivant la revendication 3, caractérisé en ce que le freinage sur disques commandé électriquement aux freins à disques de toutes les voitures en même temps consiste en une commande de freinage donnée par le conducteur au moyen d'une pédale et qui provoque l'accélération d'un moteur faisant tourner légèrement par une transmission spéciale un cylindre taraudé, lequel rapproche deux coussinets freinants du disque solidaire de l'arbre moteur, chaque moteur commandant deux mécanismes situés de part et d'autre du différentiel des ponts avant et arrière de chaque voiture.

7. Système de transport en commun suivant la revendication 4, caractérisé en ce que le système d'alignement et de réalignement automatique des voitures suiveuses consiste dans l'enregistrement à l'avant de la voiture suiveuse non alignée d'un écart de la ligne droite, cet enregistrement provoquant l'immobilisation de la moitié extrême du dernier tronçon de l'arbre de direction et, en même temps, débrayant la direction ordinaire, et en un embrayage permettant à un moteur - qui tourne seulement quand le convoi est en de forcer sur l'arbre de direction au moyen d'un engrenage

0069107

particulier et ce jusqu'à l'alignement ou au réalignement, le retour de l'arbrede direction en position normale se faisant au moyen d'éléments à ressort et le réenclenchement de la direction ordinaire ayant lieu dés cessation de l'écart.

8. Système de transport en commun suivant les revendications 3 et 5, caractérisé en ce que le freinage automatique sur les disques d'une voiture précédente, au cas où sa suiveuse perd le contact, consiste en un échange de circuits électriques qui a lieu quand la série de blocs, dont est pourvue la voiture à l'arrière, est entièrement en position sortie, le nouveau circuit formé mettant en marche le freinage électrique à disques uniquement dans la voiture non touchée et ce freinage cessant dés que le contact est repris entre les deux voitures.

FIG.1

FIG.2

FIG.3

0069107

0069107

FIG.4

FIG.5

0069107

FIG.6 A

0069107

FIG.6B

16

22

23

17

17

17

FIG.7B

FIG.7A

FIG.8A

FIG.8B

FIG.8C

FIG.8D

FIG.9A

FIG.9B

FIG.9C

FIG.9D

FIG.9E

FIG.9F

FIG.9G

FIG.9H

FIG.9I

0069107

FIG.10

0069107

FIG 11

TENSION

FIG 12

PEDALE

Rh

MF AV

MF AR

FN B

FN A

FA

P    A    B

FIG 12

P    A    B

MF AV

MF AR

FN B

FN A

FA

P    A    B

13/14

0069107

FIG 13

**Office européen des brevets**

## RAPPORT DE RECHERCHE EUROPEENNE

EP 82 87 0037

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl. ³) |
| X | US-A-3 011 580 (REID)<br><br>* page 1, colonne 1, ligne 37 à page 2, colonne 3, ligne 34; figures 1 à 4 * | 1,3,4, 5,7 | B 62 D 47/02<br>B 62 D 1/24 |
| | --- | | |
| A | GB-A-1 362 198 (BRUSH) | | |
| | --- | | |
| A | US-A-4 119 166 (AYOTTE) | | |
| | ----- | | |

|  |
|---|
| DOMAINES TECHNIQUES RECHERCHES (Int. Cl. ³) |
| B 62 D<br>G 05 D<br>B 61 B |

Le présent rapport de recherche a été établi pour toutes les revendications

| Lieu de la recherche | Date d'achèvement de la recherche | Examinateur |
|---|---|---|
| LA HAYE | 04-10-1982 | PIRIOU J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82